# EUROPEAN PATENT SPECIFICATION

(11) **EP 1 201 978 B1**
(45) Date of publication and mention of the grant of the patent: **03.05.2006**
(21) Application number: 01203830.3
(22) Date of filing: 10.10.2001
(51) Int. Cl.: F16K 3/24

(54) **Valve for regulating the flowrate of a fluid for panel radiators and the like**
Ventil zur Regelung der Strömungsgschwindigkeit eines Fluids für einen Plattenheizkörper oder dergleichen
Soupape pour la régulation de débit d'un fluide pour radiateurs à plaques ou similaire

(30) Priority: 23.10.2000 IT MI002293
(43) Date of publication of application: 02.05.2002
(73) Proprietor: WATTS CAZZANIGA S.p.A., Bolzano (IT)
(72) Inventor: Motta, Renato, 20046 Biassono (MI) (IT); Saini, Mauro, 20125 Milano (IT)
(74) Representative: Raimondi, Margherita

(56) References cited:
- DE-C- 150 604
- FR-A- 1 329 113
- GB-A- 427 469
- GB-A- 1 105 265
- GB-A- 2 305 708
- US-A- 1 899 938
- US-A- 5 393 035
- PATENT ABSTRACTS OF JAPAN vol. 007, no. 044 (M-195), 22 February 1983 (1983-02-22) & JP 57 192677 A (YAMATAKE HONEYWELL KK), 26 November 1982 (1982-11-26)

## Description

The present invention relates to a valve for regulating the flow of a fluid flowing inside a pipe, which comprises means able to interfere with the axial travel of the actuating stem of the valve obturator so as to allow adjusting the flowrate of the fluid.

In the technical sector relating to heating of rooms and the like, so-called panel radiators which consist of two substantially flat panels arranged parallel and opposite each other are known.

Said panels have internally the ducts for circulation of the hot water supplied by means of a special supply pipe arranged between the two panels and connected to the latter by means of special unions, said pipe being also intercepted by a valve for regulating the flowrate (usually thermostatic) inserted in a suitable seat.

It is also known that numerous versions of said valve have been provided, said versions all having an axial-travel obturator for opening/closing thereof, that is inserted into a first tube axially fixed but rotatably movable in respect to a second coaxial tube, fixed to the body of the valve. Examples of the prior art are disclosed into GB 427, 469 and US 1, 899, 938.

Although performing their function, said known valves have, however, certain functional limitations since, during the first few tenths of the axial travel of the obturator, delivery of the set maximum throughput, essentially occurs; consequently the valve functions in the manner of a simple on/off valve or, in any case, a valve with a flowrate/stroke regulation curve which is not very linear and does not allow effective, simple and efficient regulation of the flow in relation to the effective operating requirements.

In addition, the valves of the known type have a constructional design such that adaptation thereof to the various types of radiators is very complicated.

The technical problem which is posed, therefore, is that of providing a valve for controlling the flow of water in radiators of the panel type, which allows control of the flow delivered (from zero to the maximum value set) in accordance with a curve which is substantially linear, making the valve itself more controllable by means of motor-driven actuating systems.

Within the context of this problem a further requirement is that the valve allows to set different values of the the maximum flowrate of the fluid and that be easily adaptable to the various types of radiators.

These technical problems are solved according to the present invention by a valve for regulating the flow of a fluid flowing inside a delivery pipe according to the characteristics of claim 1.

Further details may be obtained from the following description of a non-limiting example of embodiment of the invention, provided with reference to the accompanying plates of drawings in which:
- Figure 1 is a partially sectioned view of a panel radiator with a valve according to the present invention;
- Fig. 2 is a cross-section, along the plane indicated by II-II in Fig. 1, through a first example of the valve according to the present invention in the condition where the flow is interrupted;
- Figures 3a,3b show a cross-section similar to that of Fig. 2 with the valve in the partially open and half-open condition, respectively;
- Figure 3c shows a cross-section similar to that of Fig. 2 with different regulation of the maximum flowrate and the valve totally open;
- Figure 4 shows a cross-section similar to that of Fig. 2 through a second example of embodiment of the valve according to the present invention.

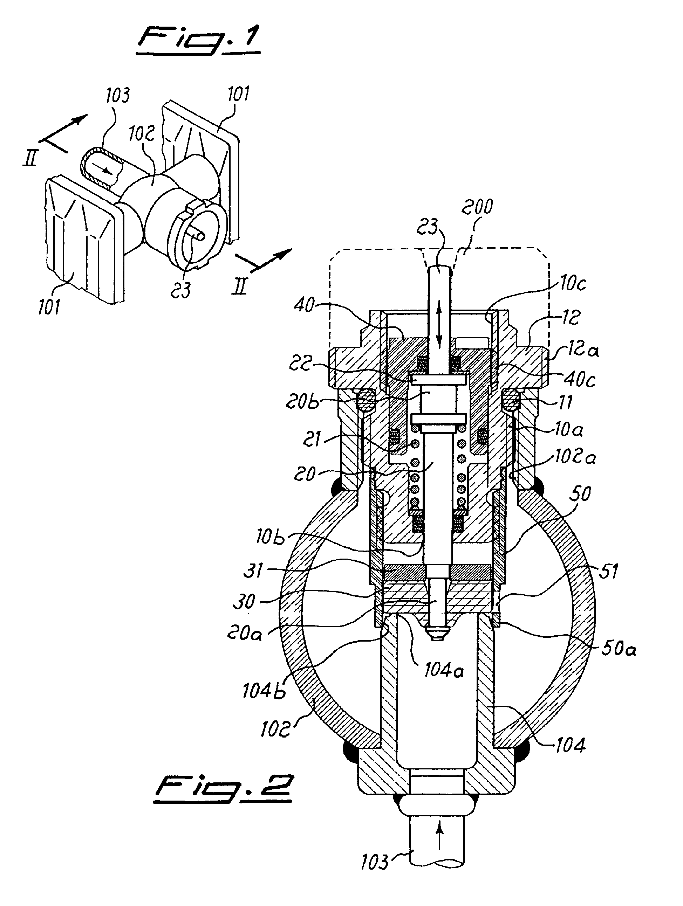

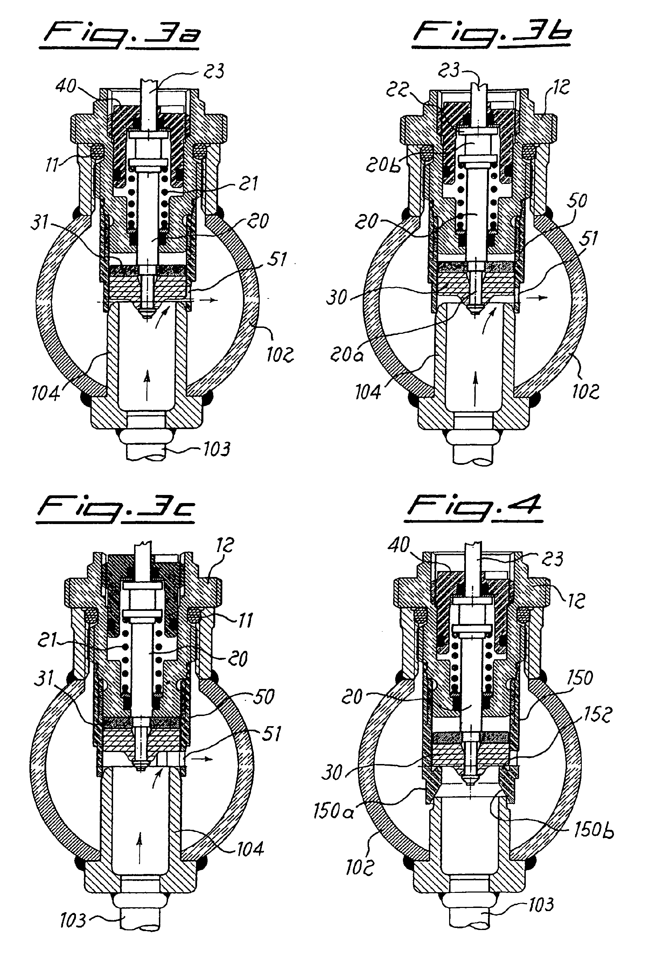

As shown in Fig. 1, a radiator of the panel type is composed of two parallel panels 101 arranged on the opposite sides of a union 102 which is joined to the delivery duct 103 and which contains the delivery regulating valve according to the present invention which regulates the aperture 104a (fig. 2) of a section 104 of the said pipe 103 inside the union.

In greater detail (Fig. 2) said valve consists of a support body 10 provided with an external threading 10a designed to engage with a corresponding female thread 102a on the union 102: a sealing ring 11 being inserted between said body 10 and union 102.

On its upper part the body 10 has, moreover, an annular mechanical end-of-travel flange 12, the external edge of which is provided with a thread 12a designed for engagement with actuating members for opening/closing the valve, as schematically indicated by 200 in the figure.

The body 10 is internally hollow and the bottom of the cavity has, formed in it, a hole 10b designed to allow the insertion of a stem 20 which can be actuated so as to be displaced axially against the thrusting action of a spring 21.

The end 20a of the stem 20 directed towards the delivery pipe has, fixed to it, an anti-deformation washer 31 and a sealing element 30 made of suitable material, such as rubber or the like, forming overall the valve obturator.

The stem part 20b inside the body 10 has an annular edge 22 with a diameter greater than that of the said stem, while the end of the stem opposite the above end is structured in the form of a spindle 23 extending coaxially outwards and suitable for coupling with said actuating means 200.

The internal upper part of the body 10 has a female thread 10c suitable for engagement with a corresponding thread 40c on a pre-regulating ring 40; said ring is in the form of an overturned cup, the upper end of which forms the abutment against which the said annular edge 22 of the stem 20 bears so as to form the upper end-of-travel stop of the said stem.

The external surface of the said ring is also provided with means suitable for engagement with operating means such as manual tools and the like.

The external surface of the bottom part of the body 10 also has, attached to it, a sleeve 50 provided with radial holes 51 and forming the outer casing of the so-called cage for regulating the delivery flow of the water.

Said sleeve is made of plastic or similar, and its free edge 50a is arranged so as to make contact with the section 104 of the pipe 103 with slight deformation of the said sleeve against an inclined surface 104b of said section 104, thus forming a seal preventing the water from escaping.

Advantageously the said sleeve 50 is fixed to the body 10 by reversible snap-engagement means.

The operating principle of the valve is as follows:
- screwing/unscrewing the pre-regulating ring 40 with respect to the female thread 10c on the body 10 defines the greater or smaller distance axially of the said ring from the bottom of the body 10, thus determining the maximum opening travel which the stem 20 may perform (determined by the thrust of the spring 21) and consequently the maximum aperture of the radial holes 51 of the cage and therefore the maximum flowrate of water which may flow out towards the radiators 101;
- once the maximum flowrate has been pre-regulated and starting from a closed valve condition (Fig. 2), it will be possible to operate the control member 200 so as to cause gradual opening of the delivery aperture, as illustrated in Figure 3a (minimum open position) and Figure 3b (half-open position).

Since the linear travel, in an axial direction, of the obturator causes a corresponding greater or lesser opening of the radial holes in the cage, regulation of the flowrate which can be represented by a substantially linear curve is obtained.

Should it be required to vary the maximum flowrate of delivery fluid, it will be possible to unscrew the ring 40 (Fig. 3c), thus causing a greater maximum opening travel of the stem 20 and therefore greater opening of the holes 51 in the sleeve 50 with a consequent increase in the maximum flowrate which can be delivered.

It is therefore evident how the valve according to the invention allows an improved capacity for regulation of the delivery flow to be obtained, resulting in flowrate curves which are more proportional to the travel of the stem, favouring the use of electro-thermal/thermostatic devices for actuating the valve.

Should flowrate curves with a different progression be required for special applications, it will be possible to modify the form and/or dimensions of the obturator and/or the position and form of the radial holes 51 in the cage.

In addition, the sleeve 50 of the cage is formed by a low-cost plastic part which can be easily fastened (for example by means of snap engagement) to the body 10 and which allows the casing itself to be easily fitted/removed; by providing different casing forms it will therefore be possible to adapt with extreme ease the valve to the different types of radiator (with internal/external sealing).

Although not shown, it is envisaged that the obturator 30 has both circumferential and annular shoulders for improving the fluid tightness.

The valve according to the invention is particularly suitable for combination with thermostatic actuators of the modulating motor type which are characteristic of these applications.

Finally, Figure 4 shows a second example of embodiment of the valve according to the invention in which the free edge 150a of the cage 150 has an internal surface provided with a shoulder 152, against which the obturator 30 comes into abutment so as to ensure the envisaged fluid tightness, while the internal surface 150b making contact with the section 104 has an inclined surface for ensuring tightness against the external surface of the union itself which in this case is straight and parallel to the axis.

## Claims

1. Valve for regulating the flow of a fluid flowing inside a delivery pipe (103,104), which comprises a support body (10) which can be constrained with a fluid supply union (102) and which has, coaxially sliding inside it, a stem (20) which can be actuated so as to be displaced axially and which has at one of its ends an obturator (30) for intercepting the delivering apertures of the fluid, means (40) able to interfere with the stem (20) itself to adjust its axial travel, a sleeve (50;150) coaxially joined to said body (10) and provided with radial holes (51) the aperture of said radial holes (51) of the sleeve (50;150) is variable with the axial position of the obturator (30), **characterized in that** the sleeve (50) of the cage is made of plastic material for a fastening coupling to the support body (10),
the free edge (150a) of the sleeve (150) has an inclined internal surface (150b) for sealing engagement with the corresponding external surface of the insert (104) of the delivery pipe (103) and
the free edge (150a) of the sleeve (150) has an internal abutment shoulder (152) for mutual engagement with the obturator (30), able to ensure fluid tightness.

2. Valve according to Claim 1, **characterized in that** said means (40) for interfereing with the stem (20) are axially movable in respect of the support body (10) to set a value of the maximum flowrate of the fluid.

3. Valve according to Claim 1, **characterized in that** said interfering means (40) associated with the body (10) consist of a ring (40) inside the said body (10).

4. Valve according to Claim 3, **characterized in that** said ring (40) has a thread (40c) suitable for engagement with a corresponding female thread (10c) on the body (10).

5. Valve according to Claim 1, **characterized in that** greater/smaller opening of the aperture of said radial holes (51) of the sleeve (50;150) is determined by the smaller/greater degree of the axial interference of the sidewall of the obturator (30) with the holes themselves.

6. Valve according to Claim 1, **characterized in that** the curve representing regulation of the flowrate is of the substantially linear type.

7. Valve according to Claim 1, **characterized in that** said sleeve (50) is made of plastic.

8. Valve according to Claim 1, **characterized in that** said obturator (30) is made of elastic material such as rubber or the like.

9. Valve according to Claim 1, **characterized in that** the internal surface of the said obturator (30) rests against an anti-deformation washer (31).

## Patentansprüche

1. Ventil zum Regulieren des Durchflusses eines Fluids, das in einem Ausströmrohr (103, 104) strömt, wobei das Ventil umfasst: einen Trägerkörper (10), der mit einem Fluidzufuhrvereiniger (102) zusammengefügt sein kann und einen in ihm koaxial gleitenden Schaft (20), der so betätigt werden kann, dass er axial verlagert wird, besitzt und an einem seiner Enden einen Verschluss (30) zum Unterbrechen der Fluidausströmöffnungen aufweist, Mittel (40), die mit dem Schaft (20) selbst in Wechselwirkung treten können, um seine axiale Bewegung einzustellen, und eine Hülse (50; 150), die mit dem Körper (10) koaxial verbunden und mit radialen Löchern (51) versehen ist, wobei die Mündung der radialen Löcher (51) der Hülse (50, 150) je nach axialer Position des Verschlusses (30) unterschiedlich ist, **dadurch gekennzeichnet, dass** die Hülse (50) des Käfigs aus Kunststoff hergestellt ist, um eine Befestigungskopplung am Trägerkörper (10) zu schaffen,
die freie Kante (150a) der Hülse (150) eine geneigte innere Oberfläche (150b) besitzt, um einen dichten Eingriff mit der entsprechenden äußeren Oberfläche des Einsatzes (104) des Ausströmrohrs (103) zu schaffen, und
die freie Kante (150a) der Hülse (150) eine innere Anschlagschulter (152) für einen gegenseitigen Eingriff mit dem Verschluss (30), um eine Fluiddichtheit erzielen zu können, besitzt.

2. Ventil nach Anspruch 1, **dadurch gekennzeichnet, dass** die Mittel (40) für die Wechselwirkung mit dem Schaft (20) in Bezug auf den Trägerkörper (10) axial beweglich sind, um einen Wert der maximalen Durchflussmenge des Fluids einzustellen.

3. Ventil nach Anspruch 1, **dadurch gekennzeichnet, dass** die Wechselwirkungsmittel (40), die dem Körper (10) zugeordnet sind, aus einem Ring (40) in dem Körper (10) bestehen.

4. Ventil nach Anspruch 3, **dadurch gekennzeichnet, dass** der Ring (40) ein Gewinde (40c) besitzt, das mit einem entsprechenden Innengewinde (10c) am Körper (10) in Eingriff gelangen kann.

5. Ventil nach Anspruch 1, **dadurch gekennzeichnet, dass** eine größere/kleinere Öffnung der Mündung der radialen Löcher (51) der Hülse (50; 150) durch den kleineren/größeren Grad der axialen Wechselwirkung der Seitenwand des Verschlusses (30) mit den Löchern selbst bestimmt ist.

6. Ventil nach Anspruch 1, **dadurch gekennzeichnet, dass** die Kurve, die die Regulierung der Durchflussmenge darstellt, im Wesentlichen vom linearen Typ ist.

7. Ventil nach Anspruch 1, **dadurch gekennzeichnet, dass** die Hülse (50) aus Kunststoff hergestellt ist.

8. Ventil nach Anspruch 1, **dadurch gekennzeichnet, dass** der Verschluss (30) aus einem elastischen Werkstoff wie etwa Gummi oder dergleichen hergestellt ist.

9. Ventil nach Anspruch 1, **dadurch gekennzeichnet, dass** die innere Oberfläche des Verschlusses (30) an einer Verformungsverhinderungs-Unterlegscheibe (31) anliegt.

## Revendications

1. Vanne servant à réguler l'écoulement d'un fluide circulant à l'intérieur d'un tuyau d'alimentation (103, 104), laquelle comporte un corps de support (10) qui peut être inséré à une extrémité dans un raccord d'alimentation de fluide (102) et qui comprend, coulissant coaxialement à l'intérieur, une tige (20) qui peut être actionnée de façon à être déplacée axialement et qui possède au niveau de l'une de ses extrémités un obturateur (30) pour intercepter les ouvertures de distribution du fluide, des moyens (40) pouvant interférer avec la tige (20) elle-même en vue de régler son déplacement axial, un manchon (50 ; 150) lié coaxialement audit corps (10) et doté de trous radiaux (51), l'ouverture desdits trous radiaux (51) du manchon (50 ; 150) pouvant varier avec la position axiale de l'obturateur (30), **caractérisée en ce que** le manchon (50) du boîtier est constitué de matériau plastique pour un couplage par fixation au corps de support (10), **en ce que** le bord libre (150a) du manchon (150) présente une surface interne inclinée (150b) destinée à un engagement étanche avec la surface externe correspondante de la pièce d'insertion (104) du tuyau d'alimentation (103) et **en ce que** le bord libre (150a) du manchon (150) comporte un épaulement de butée interne (152) destiné à un engagement mutuel avec l'obturateur (30), capable d'assurer l'étanchéité au fluide.

2. Vanne selon la revendication 1, **caractérisée en ce que** lesdits moyens (40) d'interférence avec la tige (20) sont axialement mobiles par rapport au corps de support (10) pour établir une valeur du débit maximal du fluide.

3. Vanne selon la revendication 1, **caractérisée en ce que** lesdits moyens d'interférence (40) associés au corps (10) sont constitués d'une bague (40) à l'intérieur dudit corps (10).

4. Vanne selon la revendication (3), **caractérisée en ce que** ladite bague (40) comporte un filetage (40c) approprié pour un engagement avec un filetage femelle correspondant (10c) sur le corps (10).

5. Vanne selon la revendication 1, **caractérisée en ce qu'**une ouverture plus grande ou plus petite de l'orifice desdits trous radiaux (51) du manchon (50 ; 150) est déterminée par le degré plus petit ou plus grand de l'interférence axiale de la paroi latérale de l'obturateur (30) avec les trous eux-mêmes.

6. Vanne selon la revendication 1, **caractérisée en ce que** la courbe représentant la régulation du débit est du type essentiellement linéaire.

7. Vanne selon la revendication 1, **caractérisée en ce que** ledit manchon (50) est constitué de plastique.

8. Vanne selon la revendication 1 **caractérisée en ce que** ledit obturateur (30) est constitué d'un matériau élastique tel que du caoutchouc ou analogue.

9. Vanne selon la revendication 1, **caractérisée en ce que** la surface interne dudit obturateur (30) repose contre une rondelle anti-déformation (31).
